# EUROPÄISCHE PATENTANMELDUNG

(11) **EP 3 854 988 A1**
(43) Veröffentlichungstag der Anmeldung: **28.07.2021**
(21) Anmeldenummer: 21000024.6
(22) Anmeldetag: 25.01.2021
(51) Int. Cl.: E21B 17/043, B23B 51/04, F16B 7/18

(54) **ADAPTER FÜR EINE WERKZEUGFREIE BOHRKRONEN-KUPPLUNG**

(30) Priorität: 27.01.2020 CH 972020
(71) Anmelder: Zermec GmbH, 5080 Laufenburg (CH)
(72) Erfinder: Knecht, Michael, 5080 Laufenburg (CH); Knecht, Stefan, 5080 Laufenburg (CH)
(74) Vertreter: Alder, Hans Rudi

(57) **Zusammenfassung**

Eine Werkzeug-Kupplung (1) mit einem ersten werkzeugseitigen Adapterstück (2) und einem zweiten antriebsseitigen Adapterstück (3), wobei das erste Adapterstück (2) ein erstes mehrgängiges und konisch zusammenlaufendes Innengewinde (4) mit einer ersten antriebsseitigen Randfläche (5) aufweist und das zweite Adapterstück (3) ein mit diesem ersten Innengewinde (4) zusammenwirkendes Gegengewinde (6) und eine mit dieser ersten Randfläche (5) zusammenwirkende zweite Randfläche (7) aufweist. Für die Bildung einer werkzeugfreien lock-and-release Verbindung dieser beiden Adapterstücke (2, 3) weist die erste Randfläche (5) mehrere geneigte Anschlagsflächen (8) auf und weist die zweite Randfläche (7) mehrere, mit den geneigten Anschlagsflächen (8) des ersten Adapterstücks (2) zusammenwirkende Gegenflächen (11) auf.

Im gekoppelten Zustand liegen die Anschlagsflächen (8) und die Gegenflächen (11) aufeinander, um bei Betrieb eine Drehkraft vom antriebsseitigen zweiten Adapterstück (3) auf das werkzeugseitige erste Adapterstück (2) zu übertragen, und um die genannten Gewinde (4, 6) minimal zu belasten. Die Drehkräfte für den Betrieb des Werkzeugs wirken hier kaum auf die beiden Gewinde, d.h. können sich diese nicht selbsthemmend verkeilen, weshalb mit der vorliegenden Werkzeugkupplung eine werkzeugfrei bedienbare lock-and-release Verbindung realisierbar ist.

## Beschreibung

Die Erfindung betrifft eine Werkzeug-Kupplung in Form eines zweiteiligen Adapters für ein werkzeugfreies Koppeln und Entkoppeln eines Hohlkernbohrers an eine Antriebseinheit gemäss Oberbegriff des Anspruchs 1.

Hohlkernbohrer, insbesondere Bohrkronen, finden ihre Verwendung in Verbindung mit einer Antriebseinheit, insbesondere einer Bohrmaschine, zum Bohren von Löchern mit grösserem Durchmesser, vorzugsweise für die Durchführung von Installationsrohren. Diese Hohlkernbohrer werden bei der Bearbeitung von Gestein, Beton, Mauerwerk oder anderen harten Materialien verwendet und umfassen in der Regel ein metallisches Zylinderrohr, welches stirnseitig eine Vielzahl von Schneidkörpern aufweist und antriebsseitig mit einem Bohrkronenboden versehen ist, an welchem eine Werkzeugaufnahmeverbindung vorgesehen ist, um die Bohrkrone direkt mit einer Antriebseinheit oder mit Verlängerungsrohren zu verbinden. Werkzeugaufnahmen, wie Bohrfutter u.a. sind für die auswechselbare Befestigung von Bohrern mit der Bohrmaschine hinlänglich bekannt. Bei Bohrkronen besteht das Verbindungselement zur Werkzeugaufnahme in der Regel aus einem als Sechskant ausgebildetes und auf dem Bohrkronenboden befestigtes Aufnahme-Endstück mit einem Innengewinde, wie dies bspw. aus der US2008/0296069 ersichtlich ist.

Es versteht sich, dass dieses Verbindungselement auch aus einem im Bohrkronenboden eingearbeiteten Bohrkronenbodenloch mit Innengewinde, aus einem auf den Bohrkronenboden aufgesetzten Gewindekopf mit Aussengewinde oder aus einem aufgeschraubten Kupplungsstück für einen Bajonettverschluss, etc. bestehen kann.

Solche Bohrkronen sind hinlänglich bekannt und weisen unterschiedliche Verbindungssysteme für die Bildung einer Werkzeugaufnahmeverbindung, d.h. einer Verbindung der Bohrkrone mit einer Antriebseinheit auf. So zeigen die EP-1'319'455 oder EP-2'633'931 einfache Steckverbindungen, welche sich beim Arbeiten im Feld nicht bewähren, insbesondere weil sich deren Drehmitnehmer rasch ausschlagen und die erforderlichen Drehkräfte längerfristig nicht mehr übertragen. Genügend robust und drehsicher erweisen sich jedoch Schraubverbindungen. Mit diesen Schraubverbindungen lassen sich besonders ausgebildete und verstärkende Bohrhalter mit der Bohrkrone verschrauben. Dies führt zu stabilen Aufnahmeverbindungen, welche die erhöhten Dreh- und Axialkräfte stabil übertragen. Jedoch sind diese Aufnahmeverbindungen nach intensivem Gebrauch nicht mehr in einfacher Weise wieder lösbar. Leider führen jedoch die hohen Drehmomente und Axialkräfte, wie sie im Betrieb, d.h. mit starken Vibrationskräften und einem staubigen und nassen Umfeld bei der Bearbeitung von hartem und inhomogenem Material, erforderlich sind, bei Bohrkronen zu einem raschen Verschleiss, was ein mehrfaches Auswechseln derselben erforderlich macht und was zu mühsamen und zeitintensiven Zusatzarbeiten führt, insbesondere weil sich die einzelnen Verbindungselemente der Werkzeugteile unter den erhöhten Vibrationskräften, unstetigen Quer-, Rotations- und Axialkräften fest ineinander verkeilen und verklemmen. Für das Trennen der einzelnen Bohrelemente sind deshalb besonders angepasste und massive, d.h. schwere Montagewerkzeuge erforderlich. Ein solcher Trennvorgang erweist sich nicht nur als kraftraubend, weil die Reibkräfte der verklemmten Gewinde zu überwinden sind, sondern auch als äusserst zeitintensiv, weil diese Gewinde sehr lang sind, d.h. einen langen Trennweg aufweisen.

Es ist deshalb mit der WO94/05893 auch schon eine Werkzeug-Kupplung für das lösbare Verbinden einzelner Bohrelemente eines Bohrstrangs vorgeschlagen worden, bei welcher das Verbinden und die Trennung von Bohrelemente rasch vorgenommen werden kann. Diese Werkzeug-Kupplung umfasst einen zweiteiligen Adapter, an dessen Adapterstücke wahlweise Bohrwerkzeuge, insbesondere eine Bohrkrone oder eine Antriebseinheit befestigt werden können. Dabei ist ein erstes Adapterstück mit einem mehrgängigen und konisch zusammenlaufenden Innengewinde versehen, in welches das zweite Adapterstück mit seinem analog ausgebildeten Gegengewinde einschraubbar ist. Beim Verbinden der beiden Adapterstücke werden diese bis an ihre Randflächen zusammengeschraubt und festgezogen, um sie reibschlüssig zu verbinden. Diese Werkzeug-Kupplung erlaubt ein rasches Zusammenfügen von Bohrelemente, erweist sich jedoch in der Praxis aus oben bereits ausgeführten Gründen als unerwünscht aufwendig, d.h. kraft- und zeitraubend beim Öffnen der Schraubverbindung.

Es ist deshalb Aufgabe der vorliegenden Erfindung eine Werkzeug-Kupplung in Form eines zweiteiligen Adapters für ein rasches und werkzeugfreies, d.h. wenig kraft- und zeitraubendes Koppeln und Entkoppeln zweier Bohrelemente zu schaffen.

Insbesondere soll eine rasch verbind- und lösbare Schraubverbindung für die Bildung einer werkzeugfreien lock-and-release Verbindung eines Hohlkernbohrers mit einer Antriebseinheit geschaffen werden, welche darüber hinaus auch maschinenschonend ist.

Diese Aufgabe wird erfindungsgemäss mit einer Werkzeug-Kupplung in Form eines zweiteiligen Adapters mit den Merkmalen des Anspruchs 1 gelöst. Insbesondere sieht die vorliegende Erfindung vor, für ein werkzeugfreies Koppeln und Entkoppeln eines Hohlkernbohrers mit seiner Antriebseinheit, in bekannter Weise ein hohlkernbohrerseitiges erstes Adapterstück und antriebsseitig ein zweites Adapterstück zu verwenden, wobei das erste Adapterstück ein erstes mehrgängiges und konisch zusammenlaufendes Innengewinde mit einer ersten antriebsseitigen Stossfläche aufweist und wobei das zweite Adapterstück ein mit diesem ersten Innengewinde zusammenwirkendes Gegengewinde und eine mit dieser ersten Stossfläche zusammenwirkende zweite Stossfläche aufweist. Für die Bildung einer werkzeugfreien lock-and-release Verbindung weist die erste Stossfläche des ersten Adapterstücks mehrere geneigte Anschlagsflächen auf, zwischen denen entgegengesetzt geneigte erste Zwischenflächen liegen, und weist die zweite Stossfläche des zweiten Adapterstücks mehrere, mit diesen geneigten Anschlagsflächen des ersten Adapterstücks zusammenwirkende, geneigte Gegenflächen auf, zwischen denen entgegengesetzt geneigte zweite Zwischenflächen liegen. Im gekoppelten Zustand liegen die Anschlagflächen des ersten Adapterstücks und die Gegenflächen des zweiten Adapterstücks aufeinander, um bei Betrieb eine Drehkraft vom antriebsseitigen zweiten Adapterstück auf das hohlkernbohrerseitige erste Adapterstück zu übertragen.

Besondere Ausführungsformen und Weiterbildungen der vorliegenden Erfindung weisen die Merkmale der abhängigen Ansprüche auf.

In einer bevorzugten Ausführungsform ist das erste mehrgängige und konisch zusammenlaufende Innengewinde des ersten Adapterstücks ein viergängiges Gewinde mit einer Steigung von 12.8 mm/Umgang und weist vier erste geneigte Anschlagsflächen auf. Es versteht sich, dass diese geneigten Anschlagsflächen und Gegenflächen nicht selbsthemmend zusammenwirken, d.h. einen Neigungswinkel, der grösser ist als derjenige eines Morsekegels (Morse taper), d.h. mit einem Neigungswinkel α von über ca. 1°30', und vorzugsweise mit einem Neigungswinkel α = 15° aufweisen.

In einer bevorzugten Weiterbildung ist diese Ausführungsform zur Verhinderung eines ungewollten Entkoppelns mit einer Sicherungsvorrichtung versehen. Insbesondere weist diese Sicherungsvorrichtung mindestens einen Riegel, mindestens ein elastisches Element für die Verriegelungsbewegung des mindestens einen Riegels und einen Drehring für die Verriegelungs- und Entriegelungsbewegung dieses Riegels auf. Dazu ist dieser mindestens eine Riegel in einer Führungs-Ausnehmung im zweiten Adapterstück derart geführt, dass im gekoppelten Zustand der Werkzeugkupplung dieser Riegel mit Hilfe des elastischen Elementes in eine Verriegelungs-Ausnehmung im ersten Adapterstück eingreift, d.h. in einer Schliessstellung ruht. Der Drehring ist in mindestens einer, im zweiten Adapterstück vorgesehenen Steuerkurve, bspw. in Form einer Schrägnut, derart geführt, dass der Drehring mit einer Drehbewegung - vorzugsweise mit Hilfe von mindestens eines elastischen Elementes (bspw. Spiralfeder) selbsttätig / automatisch - axial verschiebbar ist. Der mindestens eine Riegel greift mit einem Mitnehmer in eine Ringnut des Drehrings derart ein, dass dieser Riegel mit einer Drehbewegung des Drehrings aus seiner Schliessstellung in eine Freigabestellung oder umgekehrt aus einer Freigabestellung in eine Schliessstellung verschiebbar ist, um die Schraubverbindung der beiden Adapterstücke werkzeugfrei zu lösen oder gesichert zu verbinden, d.h. im verkoppelten Zustand werkzeugfrei zu verriegeln. Damit wird ein rasches Entkoppeln und gesichertes Verkoppeln der beiden Adapterstücke ermöglicht.

Es versteht sich, dass die Ausgestaltung des elastischen Elementes für die Verriegelungsbewegung des mindestens einen Riegels im Bereich des normalen fachmännischen Könnens und Wissens liegt, d.h. vom Fachmann in Form eines geeignet geführten O-Rings oder in Form von geeignet platzierten Spiral- oder Blattfederelementen realisiert sein kann.

In einer weiteren Ausgestaltung des Drehrings wird dieser mit Hilfe von elastischen Elementen, bspw. Spiralfederelementen in einer Bereitschaftsstellung gehalten, bei welcher der mindestens eine Riegel in seiner Schliessstellung liegt.

Es versteht sich auch, dass das erste Adapterstück werkzeugseitig mit einem Hohlkernbohrer, insbesondere einer Bohrkrone, lösbar oder stoffschlüssig verbunden sein kann. Ebenso kann das antriebsseitige Adapterstück lösbar oder stoffschlüssig mit der Antriebsachse der Antriebseinheit verbunden sein.

Die Vorteile der vorliegenden Erfindung sind dem Fachmann unmittelbar ersichtlich und insbesondere in der schnellen (mehrgängiges Gewinde) und werkzeugfrei bedienbaren (belastungsarmer Reibschluss) Kopplung und Entkopplung von einer Bohrkrone und einem Drehantrieb zu sehen. Dies erleichtert nicht nur das Arbeiten vor Ort, sondern verringert beim manuellen Trennen des Hohlkernbohrers von der Antriebseinheit auch die Übertragung von Querkräften auf den Drehantrieb und dessen Lager, d.h. schont langfristig die Mechanik der verwendeten Antriebseinheit.

Im Folgenden soll die Erfindung anhand der Figuren näher erläutert werden. Dabei zeigt:
- Fig. 1:: schematische Darstellung einer Bohrgestänge-Kupplung bekannter Art;
- Fig. 2:: schematische Darstellung einer erfindungsgemässen Werkzeug-Kupplung im Querschnitt;
- Fig. 3:: schematische Darstellung eines erfindungsgemässen ersten Adapterstücks im Querschnitt;
- Fig. 4:: schematische Darstellung eines erfindungsgemässen zweiten Adapterstücks;
- Fig. 5:: schematische Darstellung einer erfindungsgemässen Werkzeug-Kupplung mit einer Sicherungsvorrichtung;
- Fig. 5a:: räumliche Ansicht einer erfindungsgemässen Werkzeug-Kupplung mit einer Sicherungsvorrichtung;

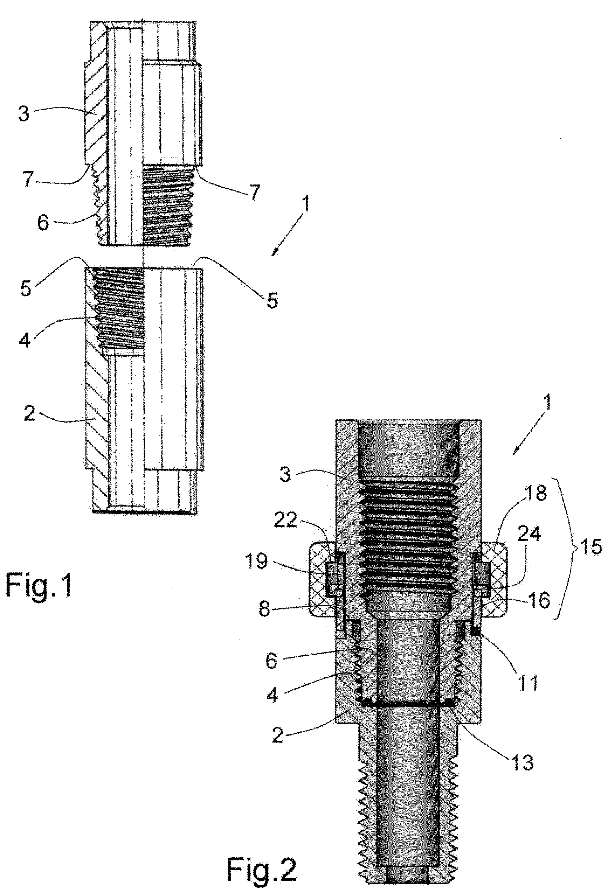

Fig. 1 zeigt eine bekannt Werkzeug-Kupplung 1 für das Zusammenfügen längerer Bohrgestänge. Diese Kupplung ist zweiteilig, d.h. weist ein erstes Adapterstück 2 und ein damit verschraubbares zweites Adapterstück 3 auf. Am ersten Adapterstück 2 ist werstückseitig ein Hohlkernbohrerstück befestigbar und ist antriebsseitig mit einem Innengewinde 4 versehen. Dieses Innengewinde 4 ist in bekannter Weise mehrgängig und konisch zusammenlaufend ausgebildet, um das Trennen der Schraubverbindung zwischen dem ersten Adapterstück 2 und zweiten Adapterstück 3 zu erleichtern. Das zweite Adapterstück 3 ist antriebsseitig mit einem Antrieb oder einem Verlängerungsrohr verbindbar. Für das Verkoppeln weist dieses zweite Adapterstück 2 ein werkstückseitiges Aussengewinde 6 auf, welches als Gegengewinde zum Innengewinde 4 des ersten Adapterstücks 2 ausgebildet ist. Für die Begrenzung der Schraubverbindung sind in bekannter Weise plane Randflächen 5, 7 vorgesehen, welche der Verspannung, d.h. der Erhöhung der Reibkraft der miteinander zusammenwirkenden Gewindegänge und damit der Schliesskraft dieser Schraubverbindung dienen.

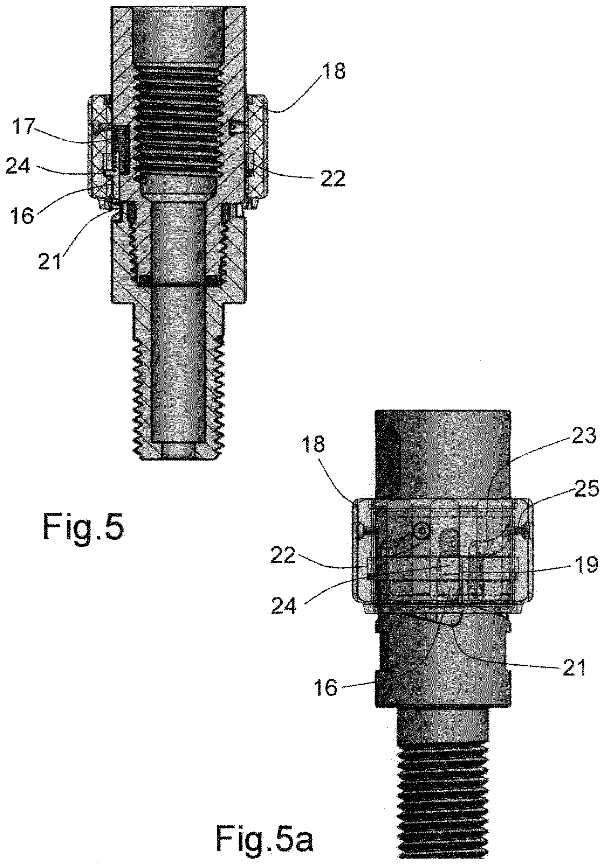

Fig. 2 zeigt beispielhaft eine erfindungsgemässe Werkzeug-Kupplung 1, welche in bekannter Weise einen zweiteiligen Adapter 2, 3 aufweist, dessen erstes Adapterstück 2 ein erstes mehrgängiges und konisch zusammenlaufendes Innengewinde 4 aufweist und mit einem komplementären Gegengewinde 6 eines zweiten Adapterstücks 3 zusammenwirkt. Erfindungsgemäss ist besteht die Randfläche des ersten Adapterstücks 2 aus mindestens einer geneigten Anschlagsfläche 8 und einer ersten Zwischenfläche 9, wobei lediglich die geneigte Anschlagsfläche 8 mit mindestens einer korrespondierenden, auf der Randfläche des zweiten Adapterstücks 3 ausgebildeten Gegenfläche 11 zusammenwirkt um bei Rotation im Betrieb die Drehkraft des Antriebs zu übertragen. Ein Dichtungsring in Form eines O-Rings 13 dichtet einen Spalt zwischen den beiden Adapterstücken 2, 3 gegen eine allfällig im Innern der Adapterstücke 2, 3 durchströmende Kühlflüssigkeit ab. In einer bevorzugten Weiterbildung der vorliegenden Erfindung weist diese Kupplung 1 eine Sicherungsvorrichtung 15 auf, welche einen Riegel 16 mit einem vorspringenden Mitnehmer 24 und einen Drehring 18 umfasst. Dieser Riegel 16 ist in einer Ausnehmung 19 geführt und greift mit seinem Mitnehmer 24 in eine Ringnut 22 des Drehrings 18 ein. Die Funktionsweise dieser Sicherungsvorrichtung 15 wird mit Hilfe der Fig. 5 näher erläutert wird.

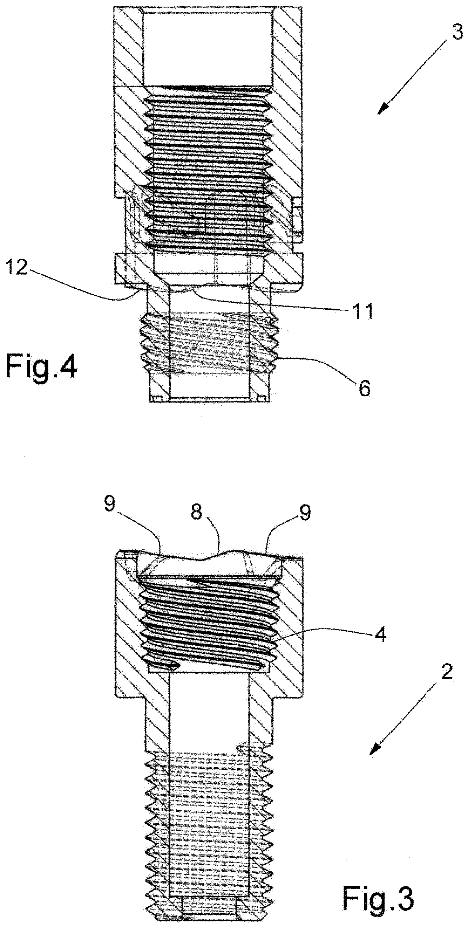

Der in Fig. 3 schematisch dargestellte Querschnitt eines erfindungsgemässen ersten Adapterstücks 2 macht die Ausgestaltung der Randfläche des ersten Adapterstücks 2 deutlich. Insbesondere weist diese Randfläche mindestens eine geneigte Anschlagsfläche 8 und mindestens eine Zwischenfläche 9 auf. Beim Einschrauben des zweiten Adapterstücks 3 kommt eine der mindestens einen, aus Fig. 4 ersichtlichen, korrespondierenden Gegenfläche 11 des zweiten Adapterstücks 3 in Anschlag mit dieser mindestens einen geneigten Anschlagsfläche 8, derart, dass beim Bohren die Drehkraft des Antriebs vom zweiten, aus Fig. 4 ersichtlichen, Adapterstück 3 auf das erste Adapterstück 2 übertragen wird. Die Neigung der mindestens einen ersten Zwischenfläche 9 entspricht der Gewindesteigung der beiden Schraubgewinde 4, 6. Die erste Zwischenfläche 9 und die korrespondierende, aus Fig. 4 ersichtliche, zweite Zwischenfläche 12 stehen im Kopplungszustand der beiden Adapterstücke 2, 3 nicht in Kontakt miteinander und können keine Drehkräfte übertragen. Vorzugsweise weist die erfindungsgemässe Randfläche vier geneigte Anschlagsflächen 8 und vier der Innengewindesteigung entsprechend geneigte erste Zwischenflächen 9 auf.

Fig. 5 zeigt eine Ausführungsform einer Sicherungsvorrichtung 15 für die erfindungsgemässe Werkzeug-Kupplung 1. Diese umfasst mindestens einen Riegel 16, mindestens ein elastisches Element 17 für die Verriegelungsbewegung des Riegels 16 und einen Drehring 18 für die Entriegelungsbewegung des Riegels 16. Der Riegel 16 ist in einer, aus Fig. 5a ersichtlichen, Führungs-Ausnehmung 19 im zweiten Adapterstück 3 geführt, derart, dass im gekoppelten Zustand der Riegel 16 mit Hilfe des elastischen Elementes 17 in eine, im ersten Adapterstück 2 vorgesehene Verriegelungs-Ausnehmung 21 eingreift, d.h. in einer Schliessstellung ruht. Der Drehring 18 ist auf das zweite Adapterstück 3 verdrehbar aufgesteckt und ist in mindestens einer, im zweiten Adapterstück 3 vorgesehenen Steuerkurve 23, bspw. in Form einer Schrägnut, mit Hilfe von mindestens einem Gleitelement 25 geführt, derart, dass der Drehring 18 mit einer Drehbewegung axial verschiebbar ist. Der Riegel 16 greift mit einem Mitnehmer 24 in eine innenliegende Ringnut 22 des Drehrings 18 ein, derart, dass der Riegel 16 bei einer Drehbewegung des Drehrings 18 aus seiner Schliessstellung in eine Freigabestellung verschiebbar ist. Die Schraubverbindung der beiden Adapterstücke 2, 3 lässt sich so werkzeugfrei zu lösen. Das Trennen, d.h. Entkoppeln der beiden Adapterstücke 2, 3 ist auf diese Art in einfacher Weise und werkzeugfrei möglich.

Es versteht sich, dass Weiterbildungen und Ausführungsformen des Designs und der hier aufgezeigten Ausgestaltungen ohne Änderung der Funktionsweise dieser Werkzeug-Kupplung im Bereich des normalen Wissens, Könnens und Handelns des Fachmanns liegen. Insbesondere kann das elastische Element 17 in Form eines, durch die mindestens eine Führungs-Ausnehmung 19 geführten O-Rings, oder in Form einer, in einer geeignet dimensionierten Ausnehmung gelagerten, Spiralfeder, ausgebildet sein. Um die vorliegende Werkzeug-Kupplung auch im entkoppelten Zustand in einer Bereitschaftsstellung zu halten, können weitere elastische Elemente, bspw. in Form von Zugfedern, vorgesehen sein, welche den Drehring 18 in einer vorgesehenen Position, vorzugsweise in der Riegel-Schliessstellung, halten.

### Referenzzeichen

- 1: Werkzeug-Kupplung
- 2: erstes Adapterstück
- 3: zweites Adapterstück
- 4: Innengewinde
- 5: erste Randfläche
- 6: Gegengewinde
- 7: zweite Randfläche
- 8: geneigte Anschlagsfläche
- 9: erste Zwischenfläche
- 11: geneigte Gegenfläche
- 12: zweite Zwischenfläche
- 13: O-Ring, elastischer Dichtungsring
- 14: Sitz für elastisches Element
- 15: Sicherungsvorrichtung
- 16: Riegel
- 17: elastisches Element
- 18: Drehring
- 19: Führungs-Ausnehmung
- 21: Verriegelungs-Ausnehmung
- 22: Ringnut
- 23: Steuerkurve
- 24: Mitnehmer
- 25: Gleitelement

## Patentansprüche

1. Werkzeug-Kupplung (1) in Form eines zweiteiligen Adapters (2, 3) für ein Koppeln und Entkoppeln eines Hohlkernbohrers an eine Antriebseinheit, welcher Adapter (2, 3) hohlkernbohrerseitig ein erstes Adapterstück (2) und antriebsseitig ein zweites Adapterstück (3) umfasst,
wobei das erste Adapterstück (2) ein erstes mehrgängiges und konisch zusammenlaufendes Innengewinde (4) mit einer ersten antriebsseitigen Randfläche (5) aufweist und das zweite Adapterstück (3) ein mit diesem ersten Innengewinde (4) zusammenwirkendes Gegengewinde (6) und eine mit dieser ersten Randfläche (5) zusammenwirkende zweite Randfläche (7) aufweist, um eine rasch verbindbare und lösbare Schraubverbindung zu bilden,
**dadurch gekennzeichnet, dass**
für die Bildung einer werkzeugfreien lock-and-release Verbindung dieser beiden Adapterstücke (2, 3) die erste Randfläche (5) des ersten Adapterstücks (2) mehrere geneigte Anschlagsflächen (8) aufweist, zwischen denen entgegengesetzt geneigte erste Zwischenflächen (9) liegen,
und die zweite Randfläche (7) des zweiten Adapterstücks (3) mehrere, mit diesen geneigten Anschlagsflächen (8) des ersten Adapterstücks (2) zusammenwirkende, geneigte Gegenflächen (11) aufweist, zwischen denen entgegengesetzt geneigte zweite Zwischenflächen (12) liegen,
derart, dass im gekoppelten Zustand die Anschlagflächen (8) des ersten Adapterstücks (2) und die Gegenflächen (11) des zweiten Adapterstücks (3) aufeinander liegen, um bei Betrieb eine Drehkraft vom antriebsseitigen zweiten Adapterstück (3) auf das hohlkernbohrerseitige erste Adapterstück (2) zu übertragen.

2. Werkzeug-Kupplung (1) nach Anspruch 1, **dadurch gekennzeichnet, dass** das erste Adapterstück (2) werkzeugseitig mit einem Hohlkernbohrer, insbesondere einer Bohrkrone lösbar verbunden ist.

3. Werkzeug-Kupplung (1) nach Anspruch 1, **dadurch gekennzeichnet, dass** das erste Adapterstück (2) werkzeugseitig mit einem Hohlkernbohrer, insbesondere einer Bohrkrone, materialschlüssig verbunden ist.

4. Werkzeug-Kupplung (1) nach einem der vorgehenden Ansprüche 1 bis 3, **dadurch gekennzeichnet, dass** das erste mehrgängige und konisch zusammenlaufende Innengewinde (4) ein viergängiges Gewinde mit einer Steigung von 12.8 mm/Umgang ist.

5. Werkzeug-Kupplung (1) nach einem der vorgehenden Ansprüche 1 bis 4, **dadurch gekennzeichnet, dass** das erste Adapterstück (2) vier erste geneigte Anschlagsflächen (8) aufweist.

6. Werkzeug-Kupplung (1) nach einem der vorgehenden Ansprüche 1 bis 5, **dadurch gekennzeichnet, dass** die geneigten Anschlagsflächen (8) und Gegenflächen (9) nicht selbsthemmend zusammenwirken, d.h. einen Neigungswinkel von α > 1°30', vorzugsweise von α ≈ 15°, aufweisen.

7. Werkzeug-Kupplung nach einem der Ansprüche 1 bis 6, **dadurch gekennzeichnet, dass** diese zur Verhinderung eines ungewollten Entkoppelns mit einer Sicherungsvorrichtung (15) versehen ist.

8. Werkzeug-Kupplung nach Anspruch 7, **dadurch gekennzeichnet, dass** die Sicherungsvorrichtung (15) mindestens einen Riegel (16), mindestens ein elastisches Element (17) für die Verriegelungsbewegung des Riegels (16) und einen Drehring (18) für die Entriegelungsbewegung des Riegels (16) aufweist, wobei der Riegel (16) in einer Führungs-Ausnehmung (19) im zweiten Adapterstück (3) geführt ist, derart, dass im gekoppelten Zustand der Riegel (16) mit Hilfe des elastischen Elementes (17) in eine Verriegelungs-Ausnehmung (21) im ersten Adapterstück (2) eingreift, d.h. in einer Schliessstellung ruht,
wobei der Drehring (18) mit Hilfe eines in mindestens einer, im zweiten Adapterstück (3) vorgesehenen Steuerkurve (23), geführten Gleitelementes (25) derart geführt ist, dass der Drehring (18) mit einer Drehbewegung axial verschiebbar ist,
und wobei der Riegel (16) mit seinem Mitnehmer (24) in eine Ringnut (22) des Drehrings (18) eingreift, derart, dass der Riegel (16) mit einer Drehbewegung des Drehrings (18) aus seiner Schliessstellung in eine Freigabestellung verschiebbar ist, um die Schraubverbindung der beiden Adapterstücke (2, 3) werkzeugfrei zu lösen und ein Entkoppeln der beiden Adapterstücke (2, 3) zu ermöglichen.

9. Werkzeug-Kupplung nach einem der Ansprüche 7 oder 8, **dadurch gekennzeichnet, dass** das elastische Element (17) ein O-Ring ist.

10. Werkzeug-Kupplung nach einem der Ansprüche 7 oder 8, **dadurch gekennzeichnet, dass** das elastische Element (17) eine Spiralfeder ist.

11. Werkzeug-Kupplung nach einem der Ansprüche 7 bis 10, **dadurch gekennzeichnet, dass** der Drehring (18) mit Hilfe von elastischen Elementen in einer Bereitschaftsstellung gehalten wird, bei welcher der mindestens eine Riegel (16) in seiner Schliessstellung liegt.
